(19) **Europäisches Patentamt / European Patent Office / Office européen des brevets**

(11) **EP 4 474 437 A1**

(12) **EUROPEAN PATENT APPLICATION**
published in accordance with Art. 153(4) EPC

(43) Date of publication:
**11.12.2024 Bulletin 2024/50**

(21) Application number: **22924007.2**

(22) Date of filing: **17.10.2022**

(51) International Patent Classification (IPC):
**C09D 11/322** (2014.01)    **C09D 11/54** (2014.01)
**B41M 5/00** (2006.01)    **B41J 2/01** (2006.01)

(52) Cooperative Patent Classification (CPC):
**B41J 2/01; B41M 5/00; C09D 11/322; C09D 11/54**

(86) International application number:
**PCT/JP2022/038551**

(87) International publication number:
**WO 2023/145151 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2022   JP 2022013169**

(71) Applicant: **Sakata INX Corporation
Osaka-shi, Osaka 550-0002 (JP)**

(72) Inventors:
• **KONISHI, Hiroyuki
  Osaka-shi, Osaka 550-0002 (JP)**

• **NODA, Ryuta
  Osaka-shi, Osaka 550-0002 (JP)**
• **MURAKAMI, Masaki
  Osaka-shi, Osaka 550-0002 (JP)**
• **HIRAKAWA, Satoshi
  Osaka-shi, Osaka 550-0002 (JP)**
• **MATSUHASHI, Yuka
  Osaka-shi, Osaka 550-0002 (JP)**

(74) Representative: **Grünecker Patent- und
Rechtsanwälte
PartG mbB
Leopoldstraße 4
80802 München (DE)**

(54) **INK SET**

(57) An object is to obtain an ink set that can provide a printed matter (fabric) offering excellent abrasion resistance of the printed text and images, as well as good washing fastness and tackiness (non-sticking) of the printed face. As a solution, an ink set comprising a pretreatment solution and an ink composition is provided, wherein the pretreatment solution contains an organic acid with a boiling point of 120°C or lower at 1 atmospheric pressure, and the ink composition contains A to E below.

A. A white pigment

B. An alkali-soluble resin being an acrylic-based copolymer resin with an acid value of 200 mgKOH/g or higher that also contains a monomer having carboxyl groups and a hydrophobic group-containing monomer as monomer components, amounting to a content of 1.0 to 3.0% by mass in the ink composition

C. A water-dispersible resin with a glass transition temperature of -25°C to 10°C;

D. A silicone-based surfactant

E. Water

## Description

### Technical Field

The present invention relates to an ink set comprising a pretreatment solution and an ink composition.

### Background Art

As described in Patent Literature 1, a pretreatment solution for inkjet recording containing complex resin particles constituted by a polyolefin-based resin impregnated in a polyurethane-based resin, and also containing an organic acid such as malonic acid, a crosslinking agent, and water, is publicly known. It is claimed that images obtained using this pretreatment solution are free of ink bleeding and have excellent adhesion and laminating strength. Since achieving these effects is stated as an object, the pretreatment solution and ink composition proposed therein are for printing materials that are to be laminated. In such application, the printed areas, when the printed matter is used, exist inside the laminated product, and are not positioned at the outermost layer. Also, the invention described in Patent Literature 1 is not intended to improve any effects relating to washing resistance or tackiness of the printed areas.

Patent Literature 2 describes treating the surface of a printing target with an acidic pretreatment solution and then printing it using an inkjet recording ink. It also describes that various types of acids can be used to turn the pretreatment solution acidic. However, the print patterns obtained by such printing are limited to provide bleed-free images, etc., and are not intended to improve any effects relating to washing resistance or tackiness of the printed areas.

Patent Literature 3 describes performing textile printing on a cloth that has been treated with a pretreatment solution, using a urethane resin-containing white ink composition, in a manner ensuring excellent washing resistance. However, it does not describe that doing so will also improve tackiness.

### Background Art Literature

#### Patent Literature

Patent Literature 1: Japanese Patent Laid-open No. 2019-177510
Patent Literature 2: Japanese Patent Laid-open No. 2005-001259
Patent Literature 3: Japanese Patent Laid-open No. 2017-186455

### Summary of the Invention

#### Problems to Be Solved by the Invention

An object of the present invention is to obtain an ink set that can provide a printed matter (fabric) offering excellent abrasion resistance of the printed text and images as well as good washing fastness and tackiness (non-sticking) of the printed face.

#### Means for Solving the Problems

After studying in earnest to achieve the aforementioned object, the inventors of the present invention found that the object could be achieved by a specific composition, and eventually completed the present invention.

Specifically, the present invention is as follows.

1. An ink set comprising a pretreatment solution and an ink composition, wherein the pretreatment solution contains an organic acid with a boiling point of 120°C or lower at 1 atmospheric pressure, and the ink composition contains A to E below.

A. A white pigment
B. An alkali-soluble resin being an acrylic-based copolymer resin with an acid value of 200 mgKOH/g or higher that contains a monomer having carboxyl groups and a hydrophobic group-containing monomer as monomer components, amounting to a content of 1.0 to 3.0% by mass in the ink composition
C. A water-dispersible resin with a glass transition temperature of -25°C to 10°C
D. A silicone-based surfactant

E. Water

2. The ink set according to 1, wherein the percentage of solids in the water-dispersible resin C in the ink composition is 10.0 to 30.0% by mass.

3. The ink set according to 1 or 2, adapted to inkjet printing.

4. The ink set according to any one of 1 to 3, adapted to textile printing.

**Effects of the Invention**

According to the ink set proposed by the present invention, a printed matter (fabric) offering excellent abrasion resistance of the printed text and images as well as good washing fastness and tackiness (non-sticking) on the printed surface, can be obtained.

**Mode for Carrying Out the Invention**

The ink set proposed by the present invention, which is an ink set comprising a pretreatment solution and an ink composition, is explained below in order. The ink set may be an ink set for inkjet printing or one for textile printing.

The glass transition temperature and weight-average molecular weight relating to the resins in the Specification are defined as follows.

<Glass Transition Temperature>

The glass transition temperature of any resin under the present invention, if the resin is an acrylic-based copolymer resin, represents a theoretical glass transition temperature obtained according to Wood's equation below:

Wood's equation:

$$1/Tg = W1/Tg1 + W2/Tg2 + W3/Tg3 + \cdots\cdots + Wx/Tgx$$

[In the formula, Tg1 to Tgx represent the glass transition temperatures of homopolymers comprising the resin's constituent monomers 1, 2, 3, ..., x, respectively, W1 to Wx represent the polymerization ratios of monomers 1, 2, 3, ..., x, respectively, and Tg represents the theoretical glass transition temperature. It should be noted that, in Wood's equation, glass transition temperatures are absolute temperatures.]

The glass transition temperature of a resin, if the resin is other than an acrylic-based copolymer resin, represents a theoretical glass transition temperature obtained by thermal analysis. The method for thermal analysis conforms to JIS K 7121 (Testing Methods for Transition Temperatures of Plastics) and, as an example, the glass transition temperature can be measured using the Pyris 1 DSC by PerkinElmer, Inc., under the conditions of 20°C/min in rate of temperature rise and 20 mL/min in flow rate of nitrogen gas.

<Weight-average Molecular Weight>

The weight-average molecular weights of the resins in the Specification can be measured according to the gel permeation chromatography (GPC) method. As an example, a chromatography is performed using the Waters 2690 (Waters Corp.) as a GPC system, PLgel 5 $\mu$m MIXED-D (Polymer Laboratories Inc.) as a column, tetrahydrofuran as a developing solvent, and an RI detector, under the conditions of 25°C in column temperature, 1 mL/min in flow rate, 10 mg/mL in sample injection concentration, and 100 $\mu$L in injection volume, to obtain a weight-average molecular weight in terms of polystyrene.

<Pretreatment Solution>

The pretreatment solution in the present invention contains an organic acid with a boiling point of 120°C or lower at 1 atmospheric pressure, and it can also contain a surfactant as necessary.

(Organic Acid with Boiling Point of 120°C or Lower at 1 Atmospheric Pressure)

For the organic acid with a boiling point of 120°C or lower at 1 atmospheric pressure used in the pretreatment solution, formic acid (boiling point 100.8°C at 1 atmospheric pressure) and/or acetic acid (boiling point 118°C at 1 atmospheric pressure) can be used.

Such organic acid is contained by preferably 5.0% by mass or higher, or more preferably 8.0% by mass or higher, in the pretreatment solution. Also, it is contained by preferably 30.0% by mass or lower, or more preferably 25.0% by mass or lower. If the content of the organic acid is too low, fixing of the resins in the ink composition printed thereon can take time. If the organic acid is contained excessively, on the other hand, it can take time to evaporate the organic acid and eliminate the free acids in the printed text or images after printing.

(Surfactant)

As described above, the pretreatment solution may or may not contain a surfactant. Among the surfactants that can be contained, cationic-based surfactants and nonionic-based surfactants are preferred. If any anionic-based surfactant or amphoteric-based surfactant is contained, it can constitute a salt with the organic acid with a boiling point of 120°C or lower at 1 atmospheric pressure.

The content of the surfactant is, for example, 0 to 1.0% by mass, or preferably 0.01 to 1.0% by mass, or more preferably 0.1 to 0.7% by mass, relative to the entire pretreatment solution.

Among the cationic-based surfactants, amidoamine-type surfactants and quaternary ammonium salt surfactants can be adopted, for example.

The amidoamine-type surfactants include alkyldimethylaminopropylamide, and the like.

The quaternary ammonium salt surfactants include, for example, alkyltrimethyl ammonium chloride, alkyldimethyl ammonium ethyl sulfate, and alkyldimethyl ammonium chloride having alkyl groups with 10 or more but no more than 25 carbon atoms (all by DKS Co., Ltd.).

The nonionic-based surfactants include one type, or two or more types, selected from silicone-based surfactants, fluorine-based surfactants, and acetylene-based surfactants.

The silicone-based surfactants include BYK-347, BYK-377, BYK-3455 (BYK Japan K.K.), and the like.

The fluorine-based surfactants include, for example, F-410, F-444, F-553 (all by DIC Corporation), FS-65, FS-34, FS-35, FS-31, FS-30 (all by DuPont de Nemours, Inc.), and the like.

The acetylene-based surfactants include, for example, one type, or two or more types, selected from those commercially available under the product names of SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465 (all by Evonik Industries AG), DYNOL 607, DYNOL 609, OLFINE E1004, OLFINE E1010, OLFINE E1020, OLFINE PD-001, OLFINE PD-002W, OLFINE PD-004, OLFINE PD-005, OLFINE EXP. 4001, OLFINE EXP. 4200, OLFINE EXP. 4123, OLFINE EXP. 4300 (Nissin Chemical Industry Co., Ltd.), and the like.

(Solvent)

The pretreatment solution in the present invention can adopt water alone, or a mixed solvent consisting of water and a water-soluble organic solvent, as a solvent.

This water-soluble organic solvent may be, for example, any of monoalcohols, polyhydric alcohols, lower alkyl ethers of polyhydric alcohols, ketones, ethers, esters, nitrogen-containing compounds, and the like. Any of these may be used alone, or two or more types may be combined.

The monoalcohols include methanol, ethanol, n-propanol, n-butanol, isobutanol, n-pentanol, n-hexanol, n-heptanol, n-octanol, n-nonyl alcohol, n-decanol, and isomers thereof, cyclopentanol, cyclohexanol, and the like, where preferably alcohols whose alkyl groups have 1 to 6 carbon atoms can be used.

Among the polyhydric alcohols, ethylene glycol, propylene glycol, 1,3-butylene glycol, 1,4-butylene glycol, 1,2-pentanediol, 1,5-pentanediol, neopentyl glycol, 1,2-hexanediol, 1,6-hexanediol, 1,2-cyclohexanediol, heptanediol, 1,8-octanediol, 1,9-nonanediol, 1,10-decanediol, glycerin, pentaerythritol, diethylene glycol, dipropylene glycol, triethylene glycol, tetraethylene glycol, polyethylene glycol, polypropylene glycol, thiodiglycol, etc., can be used.

Among the lower alkyl ethers of polyhydric alcohols, ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol-n-propyl ether, propylene glycol monobutyl ether, diethylene glycol monomethyl ether, diethylene glycol monoethyl ether, dipropylene glycol mono-n-propyl ether, dipropylene glycol mono-n-butyl ether, etc., can be used.

Specific examples of the ketones include acetone, methyl ethyl ketone, methyl butyl ketone, methyl isobutyl ketone, diisopropyl ketone, cyclopentanone, cyclohexanone, and the like.

Specific examples of the ethers include isopropyl ether, n-butyl ether, tetrahydrofuran, tetrahydropyran, 1,4-dioxane, and the like.

The esters include propylene carbonate, methyl acetate, ethyl acetate, propyl acetate, isopropyl acetate, butyl acetate, isobutyl acetate, amyl acetate, ethyl lactate, ethyl butyrate, dibutyl phthalate, dioctyl phthalate, ε-caprolactone, ε-caprolactam and other cyclic esters, and the like.

The content of the water-soluble organic solvent is preferably kept to a minimum, or no water-soluble organic solvent may be blended in.

The content of any water-soluble organic solvent, if blended in, however, is preferably 0 to 10.0% by mass, or more preferably 0 to 5.0% by mass, in the pretreatment solution. A content exceeding 10.0% by mass can lead to drying problems and lower anti-blocking property.

(Other Components)

The pretreatment solution in the present invention may or may not contain a water-soluble multivalent metal salt as another component.

The water-soluble multivalent metal salt is an organic acid or inorganic acid salt of a multivalent metal, having a solubility in 100 mL of water at 20°C of 1 g/100 mL or higher, or preferably 2 g/100 mL or higher, or more preferably 20 g/100 mL or higher.

The water-soluble multivalent metal salt may be a complex salt containing a multivalent metal, or hydrate thereof.

The multivalent metals include, for example, one type, or two or more types, selected from magnesium, calcium, strontium, zinc, copper, iron, and aluminum.

The organic acids with which to constitute a water-soluble multivalent metal salt include, for example, one type, or two or more types, of fatty acids expressed by RCOOH (in the formula, R represents hydrogen, or an organic group with 1 to 30 carbon atoms). Such organic acids include formic acid, acetic acid, propionic acid, octylic acid, lauric acid, myristic acid, pentadecylic acid, palmitic acid, margaric acid, stearic acid, 12-hydroxystearic acid, recinoleic acid, oleic acid, vaccenic acid, linoleic acid, linolenic acid, arachidic acid, behenic acid, lignoceric acid, cerotic acid, montanic acid, melissic acid, lactic acid, citric acid, gluconic acid, malic acid, tartaric acid, succinic acid, malonic acid, glutaric acid, maleic acid, fumaric acid, glutaconic acid, benzoic acid, ascorbic acid, and the like.

The inorganic acids include, for example, one type, or two or more types, selected from nitric acid, sulfuric acid, hydrogen chloride (hydrochloric acid), hydrogen bromide, hydrogen iodide, chloric acid, bromic acid, carbonic acid, and phosphoric acid.

The water-soluble multivalent metal salts, when they are multivalent metal salts of organic acids, include, for example, one type, or two or more types, selected from zinc acetate, calcium acetate, strontium acetate, magnesium acetate, zinc formate, calcium formate, strontium formate, copper (II) formate, magnesium formate, calcium benzoate, magnesium benzoate, zinc benzoate, calcium lactate, magnesium lactate, aluminum lactate, iron (II) lactate, copper lactate, calcium ascorbate, magnesium ascorbate, calcium propionate, magnesium propionate, calcium gluconate, magnesium gluconate, zinc gluconate, copper gluconate, zinc citrate, copper citrate, and hydrates thereof.

Also, the water-soluble multivalent metal salts, when they are multivalent metal salts of inorganic acids, include, for example, one type, or two or more types, selected from zinc chloride, aluminum chloride, calcium chloride, strontium chloride, iron chloride, copper (II) chloride, nickel chloride, magnesium chloride, manganese (II) chloride, zinc bromide, calcium bromide, strontium bromide, iron (II) bromide, copper (II) bromide, magnesium bromide, zinc iodide, calcium iodide, magnesium iodide, aluminum nitrate, calcium nitrate, strontium nitrate, iron (III) nitrate, copper (II) nitrate, magnesium nitrate, zinc sulfate, aluminum sulfate, iron (II) sulfate, iron (III) sulfate, copper sulfate, magnesium sulfate, potassium aluminum sulfate, calcium dihydrogen phosphate, calcium hydrogen carbonate, and hydrates thereof.

The blending amount of the water-soluble multivalent metal salt can be adjusted as deemed appropriate according to the type of the salt and purpose of blending it, and is not specifically limited.

The lower limit of the content of the water-soluble multivalent metal salt is, for example, 0.1% by mass or higher, or preferably 0.5% by mass or higher, or more preferably 1% by mass or higher, in terms of solids content in the pretreatment solution. Also, the upper limit of the content of the water-soluble multivalent metal salt is, for example, 20% by mass or lower, or preferably 15% by mass or lower, or more preferably 10% by mass or lower, in terms of solids content in the pretreatment solution.

The content of the water-soluble multivalent metal salt is, for example, 0.1 to 20% by mass, or preferably 0.5 to 15% by mass, or more preferably 1 to 10% by mass, in terms of solids content in the pretreatment solution.

<Ink Composition>

(A. White Pigment)

The ink composition in the present invention contains a white pigment A. The white pigment may be, for example, titanium oxide, aluminum oxide, or the like, where it is preferably titanium oxide that has been surface-treated with alumina and silica, or titanium oxide that has been surface-treated with alumina and silica as well as organic material.

The content of the white pigment in the ink composition is preferably 1.0% by mass or higher, or more preferably 4.0% by mass or higher, or yet more preferably 7.0% by mass or higher, relative to the total mass of the ink composition.

Also, it is preferably 20.0% by mass or lower, or more preferably 15.0% by mass or lower, or yet more preferably 13.0% by mass or lower. If the content of the white pigment is under 1.0% by mass, the image quality of the obtained printed matters tends to drop. If it exceeds 20.0% by mass, on the other hand, viscometric property of the ink composition tends to be negatively affected.

(Other Pigments)

Under the present invention, pigments of colors other than white may be blended into the ink composition.

For such pigments, any organic pigments and inorganic pigments conventionally used in standard ink compositions can be used without specific limitations.

The organic pigments include, for example, dye lake pigments, azo-based pigments, benzimidazolone-based pigments, phthalocyanine-based pigments, quinacridone-based pigments, anthraquinone-based pigments, dioxazine-based pigments, indigo-based pigments, thioindigo-based pigments, perylene-based pigments, perinone-based pigments, diketopyrrolopyrrole-based pigments, isoindolinone-based pigments, nitro-based pigments, nitroso-based pigments, anthraquinone-based pigments, flavanthrone-based pigments, quinophthalone-based pigments, pyranthrone-based pigments, indanthrone-based pigments, and the like. The inorganic pigments include carbon black, titanium oxide, red iron oxide, graphite, iron black, chrome oxide green, aluminum hydroxide, and the like.

Also, specific examples of pigments include the following.

Yellow pigments include, for example, C. I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, and the like, where C. I. Pigment Yellow 150, 155, 180, 213, and the like, are preferred.

Magenta pigments include, for example, C. I. Pigment Red 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C. I. Pigment Violet 19, and the like, where C. I. Pigment Red 122, 202, C. I. Pigment Violet 19, and the like, are preferred.

Cyan pigments include, for example, C. I. Pigment Blue 1, 2, 3, 15, 15:1, 15:2, 15:3, 15:4, 15:6, 16, 18, 22, 27, 29, 60, and the like, where C. I. Pigment Blue 15:4, and the like, are preferred.

Black pigments for using the present invention as a black ink composition include, for example, carbon black (C. I. Pigment Black 7), and the like.

It should be noted that the white pigment and other pigments need not be colored resin particles.

(Pigment Dispersant)

The ink composition in the present invention may contain a pigment dispersant as necessary.

The pigment dispersant is used to improve the dispersibility of the pigment and storage stability of the ink composition under the present invention, and while any conventionally used pigment dispersant can be used without specific limitations, preferably a polymeric dispersant is used in particular. Such pigment dispersant may be, for example, a carbodiimide-based dispersant, polyester amine-based dispersant, fatty acid amine-based dispersant, modified polyacrylate-based dispersant, modified polyurethane-based dispersant, multichain polymeric nonionic-based dispersant, polymeric ionic activator, or the like. Any of these pigment dispersants can be used alone, or two or more types can be combined.

Preferably the pigment dispersant is contained by 1 to 200 parts by mass relative to 100 parts by mass representing the amount of all pigments used. If the content of the pigment dispersant is under 1 part by mass, the pigment dispersion, and storage stability of the ink composition under the present invention, may drop. On the other hand, while it can be contained by over 200 parts by mass, doing so may not produce any difference in the effects. A more preferred lower limit of the content of the pigment dispersant is 5 parts by mass, while a more preferred upper limit is 60 parts by mass.

(B. Alkali-soluble Resin Being Acrylic-based Copolymer Resin with Acid Value of 200 mgKOH/g or Higher That Also Contains Monomer Having Carboxyl Groups and Hydrophobic Group-containing Monomer as Monomer Components, Amounting to Content of 1.0 to 3.0% by Mass in Ink Composition)

The alkali-soluble resin with an acid value of 200 mgKOH/g or higher contains a monomer having carboxyl groups and a hydrophobic group-containing monomer as monomer components. And, this alkali-soluble resin is contained by 1.0% by mass or higher in the ink composition. And, it is preferably 1.3% by mass or higher, or more preferably 1.5% by mass or higher. Also, it is contained by 3.0% by mass or lower. And, it is preferably 2.6% by mass or lower, or more preferably 2.3% by mass or lower.

The content of the alkali-soluble resin is preferably 5.0 parts by mass or more, or preferably 15.0 parts by mass or more, relative to 100 parts by mass of the pigments, from the viewpoint of increasing dispersibility of the pigments. The content of the alkali-soluble resin is preferably 100.0 parts by mass or less, or more preferably 70.0 parts by mass or less, or yet more preferably 40.0 parts by mass or less, relative to 100 parts by mass of the pigments, from the viewpoint of lowering the viscosity of the ink composition.

For the acrylic-based copolymer resin, one obtained by polymerizing a mixture of a monomer having carboxyl groups and other monomer copolymerizable therewith in the presence of a standard radical generator (such as benzoyl peroxide, tertiary butyl peroxybenzoate, azobisisobutylonitrile, etc.) in a solvent can be used.

In addition to a monomer having carboxyl groups, a monomer having anionic groups of at least one type selected from sulfonic acid groups and phosphonic acid groups may also be used. However, use of only a monomer having carboxyl groups as an anionic group-containing monomer is particularly preferred.

The monomer having carboxyl groups may be, for example, acrylic acid, methacrylic acid, crotonic acid, itaconic acid, maleic acid, fumaric acid, 2-carboxyethyl (meth)acrylate, 2-carboxyprpoyl (meth)acrylate, malic acid anhydride, fumaric acid anhydride, maleic acid half ester, or the like. Also, the monomer having sulfonic acid groups may be sulfoethyl methacrylate, or the like, for example. Additionally, the monomer having phosphonic acid groups may be phosphonoethyl methacrylate, or the like, for example.

Other monomers copolymerizable with a monomer having carboxyl groups represent monomers that include hydrophobic group-containing monomers from the viewpoint of improving the adsorptivity with the pigments.

The hydrophobic group-containing monomers include, for example: monomers having long-chain alkyl groups such as alkyl esters of (meth)acrylic acids and other radically polymerizable unsaturated carboxylic acids with 8 or more carbon atoms (such as 2-ethylhexyl (meth)acrylate, octyl (meth)acrylate, lauryl (meth)acrylate, stearyl (meth)acrylate, 2-hydroxystearyl (meth)acrylate, etc.), alkyl vinyl ethers with 8 or more carbon atoms (such as dodecyl vinyl ether, etc.), vinyl esters of fatty acids with 8 or more carbon atoms (such as vinyl 2-ethylhexanoate, vinyl laurate, vinyl stearate, etc.); monomers having alicyclic hydrocarbon groups such as cyclohexyl (meth)acrylate, etc.; monomers having aromatic hydrocarbon groups such as benzyl (meth)acrylate, styrene, α-methyl styrene, vinyl toluene, and other styrene-based monomers, and the like. Any of the foregoing hydrophobic group-containing monomers can be used alone, or two or more types can be combined.

The other monomers copolymerizable with a monomer having carboxyl groups can include hydrophilic group-containing monomers from the viewpoint of suppressing cohesion of the alkali-soluble resin in aqueous media.

The hydrophilic group-containing monomers include, for example: monomers having (poly)oxyalkylene chains such as methoxypolyethylene glycol, methoxypolyethylene polypropylene glycol, ethoxypolyethylene glycol, ethoxypolyethylene polypropylene glycol, propoxypolyethylene glycol, propoxypolyethylene polypropylene glycol, and other esterified products of a one-end alkyl-capped (poly)alkylene glycol and a (meth)acrylic acid or other radically polymerizable unsaturated carboxylic acid, as well as ethylene oxide adducts and/or propylene oxide adducts to (meth)acrylic acids and other radically polymerizable unsaturated carboxylic acids, and the like; basic group-containing monomers such as 1-vinyl-2-pyrrolidone, 1-vinyl-3-pyrrolidone, and other vinyl pyrrolidones, 2-vinyl pyridine, 4-vinyl pyridine, 5-methyl-2-vinyl pyridine, 5-ethyl-2-vinyl pyridine, and other vinyl pyridines, 1-vinyl imidazole, 1-vinyl-2-methyl imidazole, and other vinyl imidazoles, 3-vinyl piperidine, N-methyl-3-vinyl piperidine, and other vinyl piperidines, dimethylaminoethyl (meth)acrylate, diethylaminoethyl (meth)acrylate, (meth)acrylic acid tertiary butylaminoethyl, (meth)acrylamide, N-methylol (meth)acrylamide, N-butoxymethyl (meth)acrylamide, N-methoxy(meth)acrylamide, N-ethoxy(meth)acrylamide, N-dimethylacrylamide, N-propylacrylamide, and other nitrogen-containing derivatives of (meth)acrylic acids, and the like; monomers having hydroxyl groups such as hydroxyethyl (meth)acrylate, hydroxypropyl (meth)acrylate and other hydroxyalkyl esters of (meth)acrylic acids, and the like; monomers having epoxy groups such as glycidyl (meth)acrylate, and the like. Any of the foregoing hydrophilic group-containing monomers can be used alone, or two or more types can be combined.

Other copolymerizable monomers besides the hydrophobic group-containing monomers and hydrophilic group-containing monomers include, for example, methyl (meth)acrylate, ethyl (meth)acrylate, propyl (meth)acrylate, isopropyl (meth)acrylate, butyl (meth)acrylate, hexyl (meth)acrylate, cyclohexyl (meth)acrylate, and other alkyl esters of (meth)acrylic acids with fewer than 8 carbon atoms, and the like. Any of the foregoing other copolymerizable monomers besides the hydrophobic group-containing monomers and hydrophilic group-containing monomers can be used alone, or two or more types can be combined.

The alkali-soluble resin has a composition, based on mass ratio of constituting monomers, of preferably styrene/alkyl ester of radically polymerizable unsaturated carboxylic acid with 8 or more carbon atoms/(meth)acrylic acid = (35 to 55)/(25 to 35)/(15 to 35), or more preferably styrene/lauryl acrylate/acrylic acid = (35 to 55)/(25 to 35)/(15 to 35).

Or, it has a composition of preferably (meth)acrylic acid ester of alicyclic hydrocarbon with 8 or fewer carbon atoms/acrylic acid/methacrylic acid = (50 to 70)/(13 to 25)/(15 to 25), or more preferably cyclohexyl acrylate/acrylic acid/methacrylic acid = (50 to 70)/(13 to 25)/(15 to 25).

The alkali-soluble resin may use a bi- or higher-functional crosslinking agent from the viewpoint of crosslinking the resin to an appropriate degree and thereby inhibiting pigment cohesion, or it may not be crosslinked.

The bi- or higher-functional crosslinking agent only needs to be one having two or more reactive functional groups

## EP 4 474 437 A1

in the molecule in order to react with the functional groups of the alkali-soluble resin. The reactive functional groups include, for example, epoxy groups, hydroxyl groups, isocyanate groups, amino groups, aziridine groups, and the like. Additionally, a crosslinking agent that has been dispersed, emulsified, or dissolved in water, or can be dispersed, emulsified, and/or dissolved in water, is particularly preferred. Any of the foregoing bi- or higher-functional crosslinking agents can be used alone, or two or more types can be combined.

The acid value of the alkali-soluble resin is preferably 200 mgKOH/g or higher, or more preferably 210 mgKOH/g or higher, or yet more preferably 220 mgKOH/g or higher, from the viewpoint of increasing its reactivity with the organic acid contained in the pretreatment solution. Also, the acid value of the alkali-soluble resin is preferably 300 mgKOH/g or lower, or more preferably 250 mgKOH/g or lower, or yet more preferably 240 mgKOH/g or lower, from the viewpoint of improving water resistance of the printed matters. It should be noted that the acid value is a theoretical acid value indicating how many milligrams of potassium hydroxide are theoretically needed to neutralize 1 gram of the alkali-soluble resin, calculated arithmetically based on the composition of the monomers used to synthesize the alkali-soluble resin.

The glass transition temperature of the alkali-soluble resin is preferably 0°C or higher, or more preferably 20°C or higher, or yet more preferably 40°C or higher, from the viewpoint of improving anti-blocking property of the printed matters. The glass transition temperature of the alkali-soluble resin is preferably 100°C or lower, or more preferably 80°C or lower, or yet more preferably 60°C or lower, from the viewpoint of improving bending tolerance property of the printed matters.

The weight-average molecular weight of the alkali-soluble resin is preferably 5,000 or higher, or more preferably 8,000 or higher, or yet more preferably 9,000 or higher, from the viewpoint of improving water resistance of the printed matters. The weight-average molecular weight of the alkali-soluble resin is preferably 50,000 or lower, or more preferably 40,000 or lower, or yet more preferably 30,000 or lower, from the viewpoint of increasing its solubility in aqueous media.

Also, this alkali-soluble resin may have been neutralized with a basic compound. This basic compound may be sodium hydroxide, potassium hydroxide, or other alkali metal hydroxide, or alkylamine, alkanolamine, or other organic basic compound.

(C. Water-dispersible Resin with Glass Transition Temperature of -25°C to 10°C) For the water-dispersible resin C, one or more types selected from acrylic-based resin emulsions, styrene acrylic-based resin emulsions, polyurethane-based resin emulsions, and polyolefin-based resin emulsions can be adopted. Of these, preferably only acrylic-based resin emulsions and/or styrene acrylic-based resin emulsions are used.

This water-dispersible resin has a glass transition temperature of -25°C to 10°C; in particular, a water-dispersible resin with a glass transition temperature of -20°C or higher, -15°C or higher, -10°C or higher, -5°C or higher, 0°C or higher, or 3°C or higher, is preferred in this order.

The percentage of solids in the water-dispersible resin in the ink composition in the present invention is preferably 10.0% by mass or higher, or more preferably 13.0% by mass or higher, from the viewpoint of improving print quality and abrasion resistance, while it is preferably 30.0% by mass or lower, or more preferably 25.0% by mass or lower, from the viewpoint of improving print quality.

Also, the percentage of solids in the water-dispersible resin relative to the total amount of resins and pigments in the ink composition in the present invention is preferably 30.0% by mass or higher, or more preferably 40.0% by mass or higher, or yet more preferably 50.0% by mass or higher, or most preferably 60.0% by mass or higher, from the viewpoint of improving print quality and abrasion resistance. Meanwhile, it is preferably 93.0% by mass or lower, or more preferably 90.0% by mass or lower, from the viewpoint of improving print quality.

Also, the acid value of the water-dispersible resin is preferably 25.0 mgKOH/g or lower, or more preferably 20.0 mgKOH/g or lower, or yet more preferably 15.0 mgKOH/g or lower, or most preferably 13.0 mgKOH/g or lower, or even 0 mgKOH/g, while it is preferably 5.0 mgKOH/g or higher, from the viewpoint of increasing acid resistance. It should be noted that the acid value is a theoretical acid value indicating how many milligrams of potassium hydroxide are theoretically needed to neutralize 1 gram of the alkali-soluble resin, calculated arithmetically based on the composition of the monomers used to synthesize the alkali-soluble resin.

The acrylic-based resin emulsions are polymers comprising a mixture of one type, or two or more types, selected from the following monomers.

These include, for example, (meth)acrylic acid esters of alcohols having alkyl groups with 1 to 18 carbon atoms, 2-hydroxyethyl (meth)acrylate, 2-hydroxypropyl (meth)acrylate, methoxyethyl (meth)acrylate, butoxyethyl (meth)acrylate, glycidyl (meth)acrylate, allyl (meth)acrylate, ethylene glycol di(meth)acrylate, diethylene glycol di(meth)acrylate, and the like. It should be noted that "(meth)acrylate" is a general term referring to acrylates and methacrylates. Also, the following ethylenic unsaturated monomers may be used in addition to the above. These include, for example, acrylonitrile, vinyl acetate, vinyl propionate, styrene, acrylic acid, methacrylic acid, (meth)acrylamide, N-methylol (meth)acrylamide, N-methoxymethyl (meth)acrylamide, and the like.

In particular, a copolymer formed by copolymerizing three types of monomers, namely, (meth)acrylic acid, alkyl methacrylate, and alkyl acrylate, is preferred in order to better demonstrate the effects of the present invention, and furthermore the composition of the monomers in this copolymer is preferably 0.5 to 10.0 parts by mass of (meth)acrylic acid, 15.0 to 60.0 parts by mass of alkyl methacrylate, and 30.0 to 80.0 parts by mass of alkyl acrylate.

The styrene acrylic-based resin emulsions are emulsions comprising a styrene acrylic-based resin dispersed in water, and can be manufactured by means of emulsion polymerization, dispersion polymerization, suspension polymerization, grinding or solution/bulk polymerization, followed by post-emulsification.

Detailed information regarding these methods and stabilizers is found in "Emulsion Polymerization and Emulsion Polymer" (P. A. Lovell, M. S. El-Aasser, John Wiley & Sons Ltd., England, 1977, incorporated in this Specification by reference).

Commercial products of the styrene acrylic-based resin emulsions include M6963 (Japan Coating Resin Co., Ltd.), J-450, J-734, J-7600, J-352, J-390, J-7100, J-741, J-74J, J-511, J-840, J-775, HRC-1645, HPD-71, PDX-6102B, JDX-5050 (styrene acrylic-based resin emulsions, BASF SE), UC-3900 (styrene acrylic-based resin emulsion, Toagosei Co., Ltd.), and the like.

The polyurethane-based resin emulsions are emulsions comprising a polyurethane resin dispersed in water, and while any of anionic, cationic, and nonionic types can be used, an anionic or nonionic type is preferred. Also, the polyurethane resin may be, for example, a polyether-based polyurethane resin, polyester-based polyurethane resin, polyester/polyether-based polyurethane resin, polycarbonate-based polyurethane resin, or the like. Any of the foregoing polyurethane-based resin emulsions can be used alone, or two or more types can be combined.

Commercial products of the polyurethane-based resin emulsions include, for example, SUPERFLEX 210 (anionic polyester-based polyurethane resin, DKS Co., Ltd.), SUPERFLEX 130 (anionic polyether-based polyurethane resin, DKS Co., Ltd.), SUPERFLEX 500M (nonionic polyester-based polyurethane resin, DKS Co., Ltd.), SUPERFLEX 460 (anionic polycarbonate-based polyurethane resin, DKS Co., Ltd.), IMPRANIL DLP (anionic polyester-based polyurethane resin, Sumika Covestro Urethane Co., Ltd.), BAYBOND PU407 (anionic/nonionic polyester-based polyurethane resin, Sumika Covestro Urethane Co., Ltd.), SUPERFLEX 420NS (anionic polycarbonate-based polyurethane resin, DKS Co., Ltd.), TAKELAC W Series (polyurethane-based resin emulsion, Mitsui Chemicals, Inc.), R967, acid value 19 mgKOH/g (product name NeoRez R-967, polyether polyurethane-based emulsion (solids concentration 40% by mass), DSM NeoResins, Inc.), and the like.

The polyolefin-based resin emulsions are emulsions comprising a polyolefin-based resin dispersed in water. The polyolefin-based resin may be, for example, a polyethylene resin, polypropylene resin, polybutylene resin, polyolefin resin resulting from copolymerizing two or more types selected from ethylene, propylene, and butylene, or the like. Also, the polyolefin resin may be: a modified polyolefin resin resulting from introducing an amino-group, carboxyl-group, hydroxyl-group, acryloyl-group, or other polymer chain into the polyolefin chain; an oxidized polyolefin resin whose polyolefin chain has been partially oxidized; a halogenated polyolefin resin partially treated with halogen, or the like. Any of the foregoing polyolefin-based resin emulsions can be used alone, or two or more types can be combined.

Commercial products of the polyolefin-based resin emulsions include, for example, CHEMIPEARL S100 (polyethylene-based resin emulsion, Mitsui Chemicals, Inc.), CHEMIPEARL XEP800H (polypropylene-based resin emulsion, Mitsui Chemicals, Inc.), ARROWBASE TC-4010 (polypropylene-based resin emulsion, Unitika Ltd.), and the like.

The resin emulsions can include AP4710 (acrylic-silicone-based resin emulsion, Showa Highpolymer Co., Ltd.) and other known resin emulsions (other resin emulsions) used in ink compositions, besides the acrylic-based resin emulsions, styrene acrylic-based resin emulsions, polyurethane-based resin emulsions and polyolefin-based resin emulsions, to the extent that the effects of the present invention are not impaired. The other resin emulsions include, for example, polyvinyl acetate-based resin emulsions, polyvinyl chloride-based resin emulsions, and the like.

In the resin emulsions, the styrene acrylic-based resin emulsions and/or polyurethane-based resin emulsions account for preferably 70% by mass or higher, or more preferably 80% by mass or higher, or yet more preferably 90% by mass or higher, or most preferably 95% by mass or higher, from the viewpoint of improving abrasion resistance and other coating film resistance properties.

(D. Silicone-based Surfactant)

The ink composition in the present invention can contain a silicone-based surfactant D in order to optimize the printing and fabric printing processes, and additionally, when the ink composition is to be made into an inkjet ink composition, preferably a silicone-based surfactant D conventionally used in ink compositions as a surfactant is contained, according to the inkjet head used, in order to improve discharge stability.

Specific examples of the silicone-based surfactant include BYK-377 (BYK-Chemie GmbH) and other polyether-modified hydroxyl group-containing polydimethylsiloxane, BYK-302, BYK-306, BYK-331, BYK-333, BYK-349, BYK-378 (BYK-Chemie GmbH), and other polyether-modified polydimethylsiloxane, BYK-307, BYK-375 (BYK-Chemie GmbH), and other polyether ester-modified polydimethylsiloxane, BYK-310, BYK-313 (BYK-Chemie GmbH), and other polyester-modified polydimethylsiloxane, BYK-370 (BYK-Chemie GmbH) and other polyester-modified hydroxyl group-containing polydimethylsiloxane, polyester-modified methylalkylpolysiloxane, BYK-3566 (BYK-Chemie GmbH), and other silicone and polyether macromer-modified acrylates, and the like. Any of these can be used alone, or two or more types can be combined.

Preferably the content of the surfactant in the ink composition in the present invention is 0.005 to 1.0% by mass. If it is under 0.005% by mass, surface tension of the ink composition under the present invention will increase, thereby lowering its discharge stability from the inkjet head. If it exceeds 1.0% by mass, on the other hand, more bubbles will generate in the ink composition, thereby lowering its discharge stability.

(E. Water)

The ink composition in the present invention uses water as a solvent.

Alternatively, the water may further contain a mixed solvent comprising water-soluble organic solvents.

These water-soluble organic solvents include, for example, monoalcohols, polyhydric alcohols, lower alkyl ethers of polyhydric alcohols, ketones, ethers, esters, nitrogen-containing compounds, and the like. Any of these may be used alone, or two or more types may be combined. For these water-soluble organic solvents, those that can be used in the aforementioned pretreatment solution can be used by a similar content.

(Additives)

Various types of additives can be added to the ink composition in the present invention in order to manifest various functionalities as necessary. To be specific, these include other surfactants, surface conditioners, photostabilizers, surface-treatment agents, antioxidants, anti-aging agents, crosslinking promoters, polymerization inhibitors, plasticizers, preservatives, pH-adjusting agents, defoaming agents, humectants, and the like. Also, resins that function as a vehicle but are not curable may or may not be blended in. Additionally, solvents may or may not be contained.

(Basic Compound)

The ink composition in the present invention may contain a basic compound from the viewpoint of dissolving the alkali-soluble resin. The basic compound may be, for example: sodium hydroxide, potassium hydroxide, or other inorganic basic compound; ammonium, methylamine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, N-ethylmorpholine, or other organic basic compound, or the like. Any of the foregoing basic compounds can be used alone, or two or more types can be combined.

The percentage of the basic compound in the ink composition in the present invention need only to be such that the amount is enough to dissolve the alkali-soluble resin in the medium; normally, however, this percentage is preferably 0.05% by mass or higher, or more preferably 0.1% by mass or higher, from the viewpoint of increasing dispersion stability of the alkali-soluble resin, while it is preferably 1% by mass or lower, or more preferably 0.5% by mass or lower, from the viewpoint of increasing water resistance of the printed matters.

The ink composition in the present invention can also have any known resins, pigment dispersants, antifungal agents, rustproofing agents, thickening agents, antioxidants, UV absorbents, storability improving agents, defoaming agents, pH-adjusting agents, and other additives added to it according to the purpose.

<Method for Preparing Pretreatment Solution>

The pretreatment solution in the present invention can be prepared by adding the specified amounts of organic acid, and if necessary, surfactant, etc., to water in any desired order.

<Method for Preparing Ink Composition>

The method for preparing (manufacturing) the ink composition in the present invention is not specifically limited, and the aforementioned components need only need be added in sequence or simultaneously, and mixed together. For example, the method in (1) or (2) below can be adopted:

(1) a method whereby an aqueous resin varnish prepared by dissolving the alkali-soluble resin in water in the presence of the basic compound, is mixed with the pigment, and if necessary, pigment dispersant, etc., after which any of various types of dispersion machines such as ball mill, attritor, roll mill, sand mill, agitator mill, etc., is used to prepare a pigment-dispersed liquid (ink base), to which the remaining materials are added further, to prepare the ink composition; or

(2) a method whereby the pigment is dispersed according to the aforementioned method and then the acid precipitation method, ion-exchange means described in Domestic Re-publication of International Patent Laid-open No. WO2005/116147, etc., is used to obtain a resin-coated pigment comprising the pigment and the alkali-soluble resin precipitated on its surface, after which the obtained resin-coated pigment is neutralized with a basic compound and redispersed in water using any of various types of dispersion machines (high-speed agitation device, etc.), to which the remaining materials are added further, to prepare the ink composition.

The ink composition in the present invention has an initial post-manufacturing viscosity in a range of 2.0 to 15.0 mPa•s, or preferably 3.0 to 12.0 mPa•s. Viscosity can be measured using a type-E viscometer (product name RE100L Viscometer, Toki Sangyo Co., Ltd.), for example.

<Method for Printing Using Ink Set Proposed by Present Invention>

The method for printing using the ink set proposed by the present invention consists of two steps, including a step to apply the pretreatment solution on the surface of a printing paper, resin film, or other base material to be printed on, and a step to perform printing using the ink composition.

The step to apply the pretreatment solution may be implemented by means of inkjet printing, or it may be implemented by any other widely known method.

Regarding these two steps, the step to perform printing using the ink composition may be implemented in a wet-on-wet mode when the applied pretreatment solution is not yet dry, or it may be implemented in a dry-on-wet mode after the applied pretreatment solution has been dried.

**Examples**

<Pretreatment Solutions>

Pretreatment solution 1 (prepared by mixing under agitation 20 parts by mass of acetic acid, 0.2 parts by mass of SURFYNOL 440 (acetylenediol-based surfactant, HLB 8, Evonik Industries AG), and purified water, to a total of 100 parts by mass)

Pretreatment solution 2 (same as pretreatment solution 1, except that the acetic acid accounts for 10 parts by mass)

Pretreatment solution 3 (same as pretreatment solution 1, except that the acetic acid is replaced by lactic acid (organic acid whose boiling point exceeds 120°C at 1 atmospheric pressure))

<Ink Compositions>

(Pigments)

JR-809 (product name JR-809, titanium oxide treated with silica and alumina, average particle size 0.23 $\mu$m, DBP oil absorption 24 mL/100 g, Tayca Corporation)

PF-690 (product name PF-690, titanium oxide treated with silica, alumina and organic matter, average particle size 0.21 $\mu$m, DBP oil absorption 16 mL/100 g, Ishihara Sangyo Kaisha, Ltd.)

(Alkali-soluble Resins)

Alkali-soluble resin 1 (copolymer of cyclohexyl acrylate/acrylic acid/methacrylic acid = 65/16/19, weight-average molecular weight 9,500, acid value 235 mgKOH/g)

Alkali-soluble resin 2 (copolymer of styrene/lauryl acrylate/acrylic acid = 40/30/30, weight-average molecular weight 30,000, acid value 220 mgKOH/g)

(Alkali-soluble Resin Varnish)

25 parts by mass of alkali-soluble resin 1 above, 100% neutralization equivalent mass of sodium hydroxide, and purified water, were mixed to a total of 100 parts by mass, and the mixture was heated under agitation at 90°C and dissolved, to obtain alkali-soluble resin varnish 1.

Similarly, 25 parts by mass of alkali-soluble resin 2 above, 100% neutralization equivalent mass of sodium hydroxide, and purified water, were mixed to a total of 100 parts by mass, and the mixture was heated under agitation at 90°C and dissolved, to obtain alkali-soluble resin varnish 2.

(Aqueous White Ink Bases)

50 parts by mass of JR-809, 40 parts by mass of alkali-soluble resin varnish 1, and 10 parts by mass of purified water, were mixed under agitation and then kneaded in a wet circulation mill, to prepare aqueous white ink base 1.

Similarly, 50 parts by mass of PF-690, 40 parts by mass of alkali-soluble resin varnish 2, and 10 parts by mass of purified water, were mixed under agitation and then kneaded in a wet circulation mill, to prepare aqueous white ink base 2.

(Water-dispersible Resins)

(Method for Manufacturing Water-dispersible Resin 1 (Tg = 0°C))

To a monomer mixture comprising 1.5 parts by mass of acrylic acid, 46.1 parts by mass of methyl methacrylate, and 52.4 parts by mass of butyl acrylate, 3 parts by mass of AQUALON HS-10 (DKS Co., Ltd.) were added as a surfactant, and an aqueous solution prepared by dissolving 0.3 parts by mass of potassium persulfate in 46 parts by mass of distilled water was further added, and the mixture was pre-emulsified using an agitator. A polymerization container equipped with an agitator, a cooling tube, a thermometer, and a nitrogen introduction tube, was filled with 20 parts by mass of distilled water and heated to 80°C following nitrogen replacement, into which the above monomer emulsion was dripped over 3 hours and the mixture was reacted further for 2 hours, to complete the polymerization. It should be noted that a small amount of potassium persulfate was added in a late phase of polymerization to consume the remaining monomers. The obtained emulsion was adjusted to a pH of 7.5 by adding sodium hydroxide, after which distilled water was added so that the solids concentration would become 50% by mass, to obtain water-dispersible resin 1 (glass transition temperature 0°C, solids content 50% by mass).

(Method for Manufacturing Water-dispersible Resin 2 (Tg = 5°C))

It was manufactured by the same method used in the manufacture of acrylic resin emulsion 1 above, except that the monomer composition was changed to monomers comprising 1.5 parts by mass of acrylic acid, 49.5 parts by mass of methyl methacrylate, and 49.0 parts by mass of butyl acylate.

(Method for Manufacturing Water-dispersible Resin 3 (Tg = -20°C))

It was manufactured by the same method used in the manufacture of acrylic resin emulsion 1 above, except that the monomer composition was changed to monomers comprising 1.5 parts by mass of acrylic acid, 31.1 parts by mass of methyl methacrylate, and 67.4 parts by mass of butyl acylate.

(Method for Manufacturing Water-dispersible Resin 4 (Tg = -30°C))

It was manufactured by the same method used in the manufacture of acrylic resin emulsion 1 above, except that the monomer composition was changed to monomers comprising 1.5 parts by mass of acrylic acid, 22.8 parts by mass of methyl methacrylate, and 75.7 parts by mass of butyl acylate.

M6963 (product name M6963, styrene-acrylic-based emulsion (Tg = -26°C, solids concentration 45% by mass), acid value under 10 mgKOH/g, Japan Coating Resin Co., Ltd.)

(Silicone-based Surfactant)

BYK-377 (polyether-modified hydroxyl group-containing polydimethylsiloxane, BYK-Chemie GmbH)

(Solvents)

Glycerin
Propylene glycol

(Additive)

E1010 (product name OLFINE E-1010, acetylenediol-based surfactant, HLB 13, Nissin Chemical Industry Co., Ltd.)

<Manufacture of Ink Composition>

The respective components were mixed under agitation as shown in Table 1 to obtain the ink compositions in the respective Examples and Comparative Examples.

[Table 1]

| | | Examples | | | | | Comparative Examples | | | |
|---|---|---|---|---|---|---|---|---|---|---|
| | | 1 | 2 | 3 | 4 | 5 | 1 | 2 | 3 | 4 |
| Pretreatment solution | | 1 | 1 | 2 | 1 | 1 | 1 | 1 | 1 | 3 |
| Ink composition | Aqueous white ink base 1 | 18.0 | | 18.0 | 18.0 | 18.0 | 18.0 | 18.0 | 18.0 | 18.0 |
| | Aqueous white ink base 2 | | 18.0 | | | | | | | |
| | Water-dispersible resin 1 | 38.0 | 38.0 | 38.0 | | | | | 38.0 | 38.0 |
| | Water-dispersible resin 2 | | | | 38.0 | | | | | |
| | Water-dispersible resin 3 | | | | | 38.0 | | | | |
| | Water-dispersible resin 4 | | | | | | | 38.0 | | |
| | M6963 | | | | | | 42.2 | | | |
| | BYK-377 | 0.5 | 0.5 | 0.5 | 0.5 | 0.5 | 0.5 | 0.5 | | 0.5 |
| | Glycerin | 20.0 | 20.0 | 20.0 | 20.0 | 20.0 | 20.0 | 20.0 | 20.0 | 20.0 |
| | Propylene glycol | 10.0 | 10.0 | 10.0 | 10.0 | 10.0 | 10.0 | 10.0 | 10.0 | 10.0 |
| | E1010 | 0.2 | 0.2 | 0.2 | 0.2 | 0.2 | 0.2 | 0.2 | 0.2 | 0.2 |
| | Purified water | 13.3 | 13.3 | 13.3 | 13.3 | 13.3 | 9.1 | 13.3 | 13.8 | 13.3 |
| | Total | 100.0 | | | | | | | | |
| Evaluation | Washing fastness | ◎ | ◎ | ◎ | ◎ | ○ | ◎ | ◎ | Δ | × |
| | Tackiness | ○ | ○ | ○ | ○ | ○ | Δ | x | Δ | ○ |

<Production of Textile Printed Matters>

The pretreatment solutions in the Examples and Comparative Examples were impregnated in 100% cotton black cloths by 10 g per A4-size area, followed by heating and drying, to obtain print media.
On the print media, solid images were printed using an evaluation printer equipped with a Spectra head and the ink compositions in the Examples and Comparative Examples, to obtain textile printed matters.

<Evaluation Methods>

(Washing Fastness)

The textile printed matters in Examples 1 to 5 and Comparative Examples 1 to 4 were washed normally (washing conditions: wash in normal mode -> spin -> dry, water temperature approx. 20°C during washing) five times using a household washing machine, and the rate of change in the brightness (L*) from its initial value before washing was measured based on the brightnesses of each printed matter before washing and after washing that had been measured with a colorimeter (product name DR-321, Konica Minolta, Inc.), and evaluated according to the criteria below.

◎: The image density remains 90% of the initial value or higher after washing.
O: The image density is 80% of the initial value or higher but under 90% after washing.

△: The image density is 70% of the initial value or higher but under 80% after washing.

×: The image density is under 70% of the initial value after washing.

(Tackiness)

The solid white areas of the textile printed matters were evaluated by the touch of a finger according to the criteria below.

○: The coating film does not stick to the finger.

△: The coating film sticks to the finger but separates immediately.

×: The coating film sticks to the finger.

According to Examples 1 to 5 representing examples conforming to the present invention, images, etc., having excellent washing fastness and tackiness could be formed. However, Comparative Example 1 containing M6963 as a water-dispersible resin, and Comparative Example 2 containing a water-dispersible resin with a glass transition temperature of -30°C, resulted in textile printed matters having poor tackiness. Also, Comparative Example 3 not containing any silicone-based surfactant led to insufficient washing fastness and poor tackiness. Additionally, Comparative Example 4 using an organic acid whose boiling point exceeds 120°C at 1 atmospheric pressure resulted in insufficient washing fastness.

## Claims

1. An ink set comprising a pretreatment solution and an ink composition, wherein the pretreatment solution contains an organic acid with a boiling point of 120°C or lower at 1 atmospheric pressure, and the ink composition contains A to E below:

    A. a white pigment;

    B. an alkali-soluble resin being an acrylic-based copolymer resin with an acid value of 200 mgKOH/g or higher that contains a monomer having carboxyl groups and a hydrophobic group-containing monomer as monomer components, amounting to a content of 1.0 to 3.0% by mass in the ink composition;

    C. a water-dispersible resin with a glass transition temperature of -25°C to 10°C;

    D. a silicone-based surfactant;

    E. water.

2. The ink set according to claim 1, wherein a percentage of solids in the water-dispersible resin C in the ink composition is 10.0 to 30.0% by mass.

3. The ink set according to claim 1 or 2, adapted to inkjet printing.

4. The ink set according to any one of claims 1 to 3, adapted to textile printing.

## INTERNATIONAL SEARCH REPORT

| International application No. |
|---|
| **PCT/JP2022/038551** |

### A.    CLASSIFICATION OF SUBJECT MATTER

*C09D 11/322*(2014.01)i; *C09D 11/54*(2014.01)i; *B41M 5/00*(2006.01)i; *B41J 2/01*(2006.01)i
FI:    C09D11/54; C09D11/322; B41M5/00 120; B41M5/00 132; B41M5/00 114; B41J2/01 501

According to International Patent Classification (IPC) or to both national classification and IPC

### B.    FIELDS SEARCHED

Minimum documentation searched (classification system followed by classification symbols)

B41J2/01; C09D11/322; C09D11/54; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2021-152091 A (SAKATA INX CORP.) 30 September 2021 (2021-09-30)<br>claims, paragraphs [0005]-[0007], [0015], [0023], [0024], [0030], [0033], [0051]-[0055], [0059], [0070]-[0073], examples | 1-4 |
| A | JP 6425051 B1 (TOYO INK SC HOLDINGS CO., LTD.) 21 November 2018 (2018-11-21)<br>claims, paragraphs [0013], [0068]-[0071], [0091], [0093], [0094], [0104], [0133]-[0136], [0149]-[0153], [0159], [0193], examples | 1-4 |
| A | JP 2018-031084 A (SEIKO EPSON CORP.) 01 March 2018 (2018-03-01)<br>entire text | 1-4 |
| A | JP 6814365 B1 (TOYO INK SC HOLDINGS CO., LTD.) 20 January 2021 (2021-01-20)<br>entire text | 1-4 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/038551**

| Patent document cited in search report | | | Publication date (day/month/year) | Patent family member(s) | | | Publication date (day/month/year) |
|---|---|---|---|---|---|---|---|
| JP | 2021-152091 | A | 30 September 2021 | WO | 2021/192452 | A1 | |
| | | | | claims, paragraphs [0005]-[0007], [0015], [0023], [0024], [0030], [0033], [0051]-[0055], [0059], [0070]-[0073], examples | | | |
| JP | 6425051 | B1 | 21 November 2018 | US | 2020/0172754 | A1 | |
| | | | | claims, paragraphs [0020], [0093]-[0100], [0122], [0124], [0125], [0137], [0179]-[0183], [0195]-[0199], [0205], [0240], examples | | | |
| | | | | WO | 2019/013338 | A1 | |
| | | | | EP | 3653679 | A1 | |
| JP | 2018-031084 | A | 01 March 2018 | US | 2018/0058002 | A1 | |
| | | | | entire text | | | |
| | | | | EP | 3287562 | A1 | |
| JP | 6814365 | B1 | 20 January 2021 | WO | 2021/117517 | A1 | |
| | | | | entire text | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019177510 A
- JP 2005001259 A
- JP 2017186455 A
- WO 2005116147 A

**Non-patent literature cited in the description**

- **P. A. LOVELL ; M. S. EL-AASSER**. Emulsion Polymerization and Emulsion Polymer. John Wiley & Sons Ltd., 1977